# EUROPÄISCHE PATENTSCHRIFT

(11) **EP 0 783 016 B1**
(45) Veröffentlichungstag und Bekanntmachung des Hinweises auf die Patenterteilung: **31.07.2002**
(21) Anmeldenummer: 96120459.1
(22) Anmeldetag: 19.12.1996
(51) Int. Cl.: C08J 5/18, C08K 3/04, B32B 27/36, C08J 3/22

(54) **Mit Kohlenstoffteilchen pigmentierte wasserdampfdurchlässige, wasserdichte Polyetherestermembran**
Polyetherester membrane pigmented with carbon particles, water vapour-permeable and waterproof
Membrane en polyétherester pigmentée avec particules de carbone, perméable à la vapeur d'eau et imperméable à l'eau

(30) Priorität: 02.01.1996 DE 19600007
(43) Veröffentlichungstag der Anmeldung: 09.07.1997
(73) Patentinhaber: Sympatex Technologies GmbH, 42103 Wuppertal (DE)
(72) Erfinder: van de Ven, Henricus Joannes Maria, 6825 CT Arnhem (NL); Spijkers, Jozef Christiaan Wilhelmus, 42781 Haan (NL)
(74) Vertreter: Fett, Günter

(56) Entgegenhaltungen:
- EP-A- 0 111 360
- EP-A- 0 708 212
- DD-A- 119 429
- DE-A- 1 469 980
- US-A- 3 766 146

## Beschreibung

Die Erfindung betrifft eine wasserdampfdurchlässige, wasserdichte Polyetherestermembran, die mit Kohlenstoffteilchen pigmentiert ist, deren Herstellung sowie deren Verwendung.

Es ist schon beschrieben worden, Filme aus Polymeren herzustellen, welche Kohlenstoffteilchen enthalten und wasserdicht aber wasserdampfdurchlässig sein sollen. Derartige Filme werden z.B. in der europäischen Patentanmeldung EP-A2-0 214 859 beschrieben. Die Filme sind mikroporös, enthalten 20 bis 40 % eines Füllers, der u.a. Kohlenstoff sein kann (carbon black). Die Filme sind verstreckt, die Teilchengröße des eingelagerten Kohlenstoffs beträgt etwa 0,05 bis 50 µm.

Es hat sich aber gezeigt, daß diese Filme doch nicht ganz wasserdicht sind.

Wie aus der DE-A1-4 003 765 hervorgeht, hat man auch bereits wasserdampfdurchlässiges, wasserdichtes Material hergestellt, das aus einem Trägermaterial besteht, auf dem eine Membran aufgebracht ist, die keine Poren aufweist. An dieser Membran sind Adsorberteilchen zum Haften gebracht; bei diesem Adsorber kann es sich um Aktivkohle handeln, die z.B. einen mittleren Durchmesser von 0,1 bis 1 mm aufweist.

Membranen oder Folien dieser Art weisen jedoch eine ganze Reihe von Nachteilen auf. Zum einen läßt die Verteilung der Kohlenstoffteilchen im Polymer zu wünschen übrig; zum anderen erreichen derart pigmentierte Folien oder Membranen nicht bestimmte Eigenschaften, die für verschiedene Verwendungszwecke gefordert sind, wie z.B. eine hohe UV-Stabilität und ein günstiges IR-Remissionsverhalten.

Obwohl bereits eine ganze Reihe von mit Kohlenstoff versehenen Folien und Membranen bekannt sind, besteht deshalb noch ein Bedürfnis nach verbesserten wasserdampfdurchlässigen, wasserdichten Membranen sowie nach Verfahren, mit welchen derartige Membranen vorteilhaft hergestellt werden können.

Aufgabe der Erfindung ist es deshalb, eine wasserdampfdurchlässige, wasserdichte kohlenstoffhaltige Membran zur Verfügung zu stellen, die sehr homogen ist, welche über gute UV-Stabilitäten sowie erhöhte IR-Remission verfügt und die vielseitig verwendet werden kann.

Diese Aufgabe wird gelöst durch eine wasserdampfdurchlässige, wasserdichte Polyetherestermembran enthaltend in feiner Verteilung 1 bis 10 Gew% Kohlenstoffteilchen einer durchschnittlichen Größe von 5 bis 40 nm. Vorzugsweise sind die Kohlenstoffteilchen Ruß. Die verteilten Teilchen sind in der Membran in vorteilhafter Weise in einer Konzentration von 2 bis 5 Gew% vorhanden. Die Teilchengröße der Teilchen beträgt vorzugsweise 15 bis 25 nm.

Ein weiterer Gegenstand der Erfindung ist ein Verfahren zur Herstellung von wasserdampfdurchlässigen wasserdichten Polyetherestermembranen, das dadurch gekennzeichnet ist, daß man zunächst durch Aufschmelzen des Polyetheresters und Verteilen von Kohlenstoffteilchen einer durchschnittlichen Größe von 5 bis 40 nm unter Anwendung hoher Scherkräfte ein Konzentrat mit bis zu 40 Gew% Kohlenstoffteilchen herstellt und dieses Konzentrat in fester oder flüssiger Form in weiterem Polyetherester einarbeitet und diese so mit Kohlenstoffteilchen versehene Polyetherestermasse zu wasserdampfdurchlässigen, wasserdichten Membranen verarbeitet. Bei dem erfindungsgemäßen Verfahren hat es sich als vorteilhaft erwiesen, wenn man ein Konzentrat mit bis zu 35 Gew%, bevorzugt bis zu 30 Gew% Kohlenstoffteilchen in Polyetherester herstellt. Günstig ist es, wenn man ein Konzentrat von mindestens 15 Gew%, bevorzugt mindestens 20 Gew% in Polyetherester herstellt. Zur Herstellung des Konzentrats wird vorzugsweise ein Polyetheresterpolymer mit einer relativen Viskosität von η = 3,5 bis 4,2, gemessen in Meta-Kresol verwendet.

Die wasserdampfdurchlässigen, wasserdichten Polyesterethermembranen gemäß der Erfindung lassen sich ferner in vorteilhafter Weise zur Herstellung von textilen oder technischen Laminaten, insbesondere zu Bekleidungsstücken, zur Herstellung von Tarnbekleidungen oder zur Herstellung von zur Tarnung dienenden Flächengebilden sowie zur Herstellung von Dachunterspannbahnen verwenden.

Die zur Herstellung der erfindungsgemäßen Membran eingesetzten Polyetherester sind vorzugsweise Copolyetherester, die sich von längerkettigen Polyglykolen, kurzkettigen Glykolen mit 2 bis 4 Kohlenstoffatomen und Dicarbonsäuren ableiten, wobei vorzugsweise die Polymere Copolyetherester sind, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 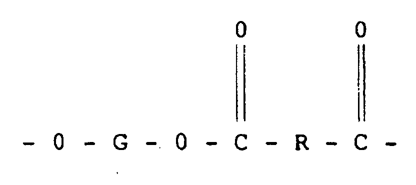 und die kurzkettigen Estereinheiten der Formel 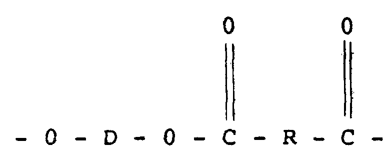 entsprechen, worin G einen zweiwertigen Rest darstellt, der nach der Entfernung von endständigen Hydroxylgruppen aus mindestens einem langkettigen Glykol eines mittleren Molekulargewichts von 600 bis 6 000 und eines Atomverhältnisses von Kohlenstoff zu Sauerstoff zwischen 2,0 und 4,3 zurückbleibt, wobei mindestens 20 Gew% des langkettigen Glykols ein Atomverhältnis von Kohlenstoff zu Sauerstoff zwischen 2,0 und 2,4 besitzen und 15 bis 50 Gew% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt, und D einen zweiwertigen Rest darstellt, der nach der Entfernung von Hydroxylgruppen aus mindestens einem Diol eines Molekulargewichts von weniger als 250 zurückbleibt, wobei mindestens 80 Mol% der verwendeten Dicarbonsäure aus Terephthalsäure oder ihren esterbildenden Äquivalenten und zumindest 80 Mol des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildenden Äquivalente darstellt, und des Diols mit einem kleinen Molekulargewicht, das kein 1,4-Butandiol oder dessen esterbildenden Äquivalente darstellt, höchstens 20 beträgt und die kurzkettigen Estereinheiten 40 - 80 Gew des Copolyetheresters betragen.

Bevorzugt sind ferner Polyetherester, bei denen die Polymere ganz oder teilweise Copolyetherester sind, worin mindestens 70 Mol% der verwendeten Dicarbonsäure 2,6-Naphthalindicarbonsäure oder deren Ester bildenden Äquivalente sind und bei dem mindestens 70 Mol% des verwendeten Diols mit einem kleinen Molekulargewicht 1,4-Butandiol oder dessen esterbildenden Äquivalente ist und die Summe der Molprozente der Dicarbonsäure, die keine 2,6-Naphthalindicarbonsäure oder deren Ester bildende Äquivalente ist und des Diols mit einem kleinen Molekulargewicht, das kein 1,4-Butandiol oder dessen Ester bildende Äquivalente ist, höchstens 30% beträgt und die Estereinheiten mit kurzen Ketten 35 bis 80 Gew% des Copolyetheresters ausmachen.

Zudem können die Polymere Copolyetherester sein, worin die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 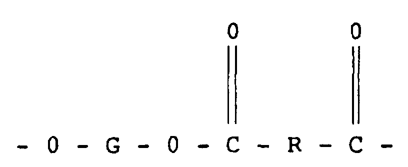 und die kurzkettigen Estereinheiten der Formel 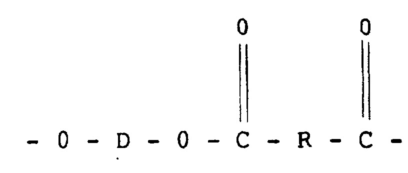 entsprechen, wobei G einen zweiwertigen Rest darstellt, der nach der Entfernung von endständigen Hydroxylgruppen aus mindestens einem langkettigen Glykol eines mittleren Molekulargewichts von 600 bis 4 000 und eines Atomverhältnisses von Kohlenstoff zu Sauerstoff zwischen 2 und 4,3 zurückbleibt, wobei mindestens 20 Gew% des langkettigen Glykols ein Atomverhältnis von Kohlenstoff zu Sauerstoff zwischen 2,0 und 2,4 besitzen und 15 bis 50 Gew% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt und D einen zweiwertigen Rest darstellt, der nach der Entfernung von Hydroxylgruppen aus mindestens einem Diol eines Molekulargewichts von weniger als 250 zurückbleibt, wobei mindestens 70 Mol % der verwendeten Dicarbonsäure aus 2,6-Naphthalindicarbonsäure oder ihrer esterbildenden Äquivalente besteht und mindestens 70 Mol % des Diols mit dem kleinen Molekulargewicht aus 1,4 Butandiol oder dessen esterbildenden Äquivalenten besteht und die Summe der Mol % von der Dicarbonsäure, die keine 2,6-Naphthalindicarbonsäure oder ihrer esterbildenden Äquivalente ist und des Diols mit einem kleinen Molekulargewicht, das kein 1,4-Butandiol oder dessen esterbildende Äquivalente ist, höchstens 30 % beträgt und die Estereinheiten mit kurzen Ketten 35 bis 80 Gew% des Copolyetheresters betragen.

Die vorstehend beschriebenen Polyetherester können sowohl zur Herstellung des Konzentrats dienen als die Polyetherester sein, in welche das Konzentrat eingearbeitet wird.

Die Menge an Kohlenstoffteilchen, welche in den Polyetherester zur Herstellung des Konzentrats eingearbeitet werden kann, kann in weiten Bereichen schwanken. Es ist möglich, Konzentrationen bis zu 40 Gew% Kohlenstoff, insbesondere Ruß in das Konzentrat einzuarbeiten.

Es ist von Wichtigkeit, daß bei der Herstellung des Konzentrats hohe Scherkräfte angewandt werden, um eine möglichst homogene Verteilung der Kohlenstoffteilchen in dem Polyetherester zu gewährleisten. Doppelschneckenextruder, wie beispielsweise der Extruder ZSK-30, wie er von der Firma Werner und Pfleiderer, Stuttgart angeboten wird, haben sich hierzu bestens bewährt. Der Extruder ZSK-30 ist besonders zu empfehlen mit einer Doppelschnecke, drei Knetblöcken in der Aufheizzone und drei weiteren Knetblöcken in der Mischzone.

Die Menge der im Konzentrat befindlichen Kohlenstoffteilchen, insbesondere Rußteilchen, hängt einmal von dem geplanten Einsatzzweck ab und kann leicht auf die jeweiligen Einsatzgebiete angepaßt werden. Dabei kann es natürlich vorteilhaft sein für das Konzentrat die maximal mögliche Menge an Ruß einzuarbeiten. Die Viskosität des Polyetheresters, der zur Herstellung des Konzentrats dient, sollte möglichst hoch sein, vorzugsweise beträgt die relative Viskosität des Polymers η = 3,5 bis 4,2, wobei höhere und niedere Werte möglich sind. Die relative Viskosität ist diejenige, welche in Meta Kresol gemessen wird.

Das Konzentrat kann direkt in flüssiger Form dem weiteren Polyetherester zugefügt und soll mit diesen gut vermischt werden. Auch hier hat es sich bestens bewährt, wenn die Einarbeitung des Konzentrates in den Polyetherester unter Anwendung hoher Scherkräfte erfolgt. Entsprechende Aufschmelz- und Mischvorrichtungen, die im Rahmen der Erfindung geeignet sind, werden u.a. in Polymer Engineering and Science, Mid-March 1988, Vol. 28, No. 5, Seite 311 bis 320 beschrieben. Auf diese Offenbarung wird sich hier ausdrücklich bezogen. Besonders geeignet sind für die Zwecke der vorliegenden Erfindung Extruder, wie sie unter der Bezeichnung "Barr-Extruder" oder "Maillefer Extruder" im einschlägigen Handel erhältlich sind. Derartige Vorrichtungen werden u.a. in dem Schweizer Patent 363 149 und in dem US-Patent 3 698 451 beschrieben. Auf die Offenbarung dieser beiden Patentschriften wird sich hier ausdrücklich bezogen.Die so hergestellte Masse wird sodann auf in an sich bekannte Weise zu wasserdampfdurchlässigen, wasserdichten Membranen verarbeitet.

Selbstverständlich ist es aber auch möglich, das Konzentrat zunächst zu Granulaten, Pulvern u.dgl. zu verarbeiten und es erst später zur Herstellung von wasserdampfdurchlässigen, wasserdichten Membranen zu verwenden.

Die zugesetzte Menge an Konzentrat wird so bemessen, daß die hergestellte wasserdampfdurchlässige, wasserdichte Polyetherestermembran in feiner Verteilung einen Anteil von 1 bis 10 Gew% Kohlenstoffteilchen enthält.

Die Kohlenstoffteilchen, insbesondere der Ruß, welche eingearbeitet werden, weisen eine durchschnittliche Größe von etwa 5 bis 40 nm auf. Rußteilchen mit dieser durchschnittlichen Größe sind im Handel erhältlich und können auf einfache Art und Weise hergestellt werden.

Es war besonders überraschend, daß die auf diese Weise hergestellten wasserdampfdurchlässigen, wasserdichten Polyetherestermembranen ihre hervorragenden Eigenschaften, nämlich die Wasserdampfdurchlässigkeit und gleichzeitig die Wasserdichtigkeit beibehalten, obwohl in ihnen Kohlenstoffteilchen eingelagert sind. Darüber hinaus zeichnen sich die Membranen durch eine unerwartet hohe UV-Stabilität aus. Verbesserungen um das zwei- bis dreifache und mehr können erreicht werden.

Die Struktur der Membranen ist sehr homogen, sie ist nicht mikroporös und deshalb für die verschiedensten Einsatzzwecke besonders geeignet.

Hervorzuheben ist ferner das hervorragende Verhalten gegenüber Infrarotstrahlung. Die IR-Remissionseigenschaften sind verbessert, so daß sich die Membranen vorzüglich für Einsatzzwecke eignen, bei denen eine entsprechende. IR-Remission erwünscht ist, d.h. insbesondere bei textilen und technischen Flächengebilden, die für Tarnzwecke verwendet werden. Hier sind u.a. zu nennen: Tarnbekleidung, Planen, die zum Herstellen von LKW-Planen für Abdeckungszwecke, zur Herstellung von Zelten u.dgl. dienen.

Ein weiterer vorteilhafter Einsatzbereich der erfindungsgemäßen Membranen sind Dachunterspannbahnen. Diese dienen beim Aufbau der Dachkonstruktion nicht nur zur Gewährleistung der Wasserdichtheit des Daches, sondern auch zur Regulierung eines speziellen vorteilhaften Klimas, da diese Unterspannbahnen wasserdampfdurchlässig sind, d.h. Wasserdampf, der sich in Dachräumen bildet, nach außen hin abgeben können, andererseits aber Wasser, das durch die Dachziegel hindurchgekommen sein könnte, abhalten. Die Dachunterspannbahnen sind im übrigen dazu geeignet, Wind abzuhalten, was für die Dachräume von großem Vorteil ist. Die Dachunterspannbahnen setzen sich vorzugsweise aus der Polyetherestermembran und einem Vlies zusammen, d.h. sie werden als Laminate verwendet. Auch macht sich hier die gute UV-Beständigkeit günstig bemerkbar, z.B. wenn die Unterspannbahnen eine zeitlang direkt der Witterung ausgesetzt sind, weil die Dachziegel noch nicht angebracht werden konnten.

Die Polyetherestermembranen können in an sich bekannter Weise zur Herstellung von textilen oder technischen Laminaten dienen. Dabei ist eine Verbindung mit textilen oder technischen Flächengebilden wie Geweben, Maschenwaren insbesondere Gewirke usw. sowie mit Vliesen usw. möglich. Die Verbindung kann durch punktförmige, musterförmige, rasterförmige oder netzartige Verklebung geschehen. Die erfindungsgemäßen Membranen können auch direkt bei ihrer Herstellung durch Extrudieren auf die textilen oder technischen Flächengebilde erzeugt werden.

Die erfindungsgemäßen Membranen zeichnen sich auch durch gute Antistatikeigenschaften aus, wobei sie vorteilhaft bei Spezialbekleidung Einsatz finden können. Hier seien nur beispielsweise genannt sortenreine Bekleidung, d.h. Bekleidung, die neben dem Polyetherester insbesondere aus Polyester aufgebaut ist, Arbeitsschutzbekleidung, Bekleidungen, welche in sogenannten Reinräumen erforderlich sind u.dgl.

Gemäß der Erfindung lassen sich Membranen z.B. mit einer Dicke von 5 - 50 µm herstellen. Somit können einerseits sehr dünne Membranen mit einer Dicke von beispielsweise 5 bis 15 um, die besonders günstig im Bekleidungssektor Verwendung finden, anderseits dickere Membranen mit einer Dicke von beispielsweise 20 bis 50 µm für technische Einsatzzwecke, wie beispielsweise Dachunterspannbahnen, hergestellt werden. Es können auch mehrschichtige Membranen, bei denen eine oder mehrere der Schichten die erfindungsgemäße Membran ist, hergestellt werden. Hierbei hat sich ein Koextrusionsverfahren als besonders günstig herausgestellt, wie es beispielsweise in US-A-4,725,481 beschrieben ist.

## Patentansprüche

1. Wasserdampfdurchlässige, wasserdichte Polyetherestermembran enthaltend in feiner Verteilung 1 bis 10 Gew% Kohlenstoffteilchen einer durchschnittlichen Größe von 5 bis 40 nm.

2. Polyetherestermembran nach Anspruch 1, **dadurch gekennzeichnet, daß** die Kohlenstoffteilchen Ruß sind.

3. Polyetherestermembran nach einem der Ansprüche 1 bis 2, **dadurch gekennzeichnet, daß** sie 2 bis 5 Gew% Teilchen enthalten.

4. Polyetherestermembran nach einem der Ansprüche 1 bis 3, **dadurch gekennzeichnet, daß** die Teilchengröße 15 bis 25 nm beträgt.

5. Verfahren zur Herstellung von wasserdampfdurchlässigen, wasserdichten Polyetherestermembranen, **dadurch gekennzeichnet, daß** man zunächst durch Aufschmelzen von Polyetherestern und Verteilen von Kohlenstoffteilchen einer durchschnittlichen Größe von 5 bis 40 nm unter Anwendung hoher Scherkräfte ein Konzentrat mit bis zu 40 Gew%, bevorzugt bis zu 35 Gew% Kohlenstoffteilchen in Polyetherester herstellt und dieses Konzentrat in fester oder flüssiger Form in weiterem Polyetherester einarbeitet und diese so mit Kohlenstoffteilchen versehene Polyetherestermasse zu wasserdampfdurchlässigen, wasserdichten Membranen verarbeitet.

6. Verfahren nach Anspruch 5, **dadurch gekennzeichnet, daß** man zunächst ein Konzentrat mit bis zu 30 Gew% Kohlenstoffteilchen in Polyetherester herstellt.

7. Verfahren nach Anspruch 5 oder 6, **dadurch gekennzeichnet, daß** man zunächst ein Konzentrat von mindestens 15 Gew%, bevorzugt mindestens 20 Gew% in Polyetherester herstellt.

8. Verfahren nach einem oder mehreren der Ansprüch 5 bis 7, **dadurch gekennzeichnet, daß** man zur Herstellung des Konzentrats ein Polyetheresterpolymer mit einer relativen Viskosität η = 3,5 bis 4,2, gemessen in Meta-Kresol verwendet.

9. Verfahren nach einem oder mehreren der Ansprüche 1 bis 8, **dadurch gekennzeichnet, daß** die Einarbeitung des Konzentrates in den Polyetherester unter Anwendung hoher Scherkräfte erfolgt.

10. Verwendung der wasserdampfdurchlässigen, wasserdichten Polyetherestermembranen nach einem der Ansprüche 1 bis 9 zur Herstellung von textilen oder technischen Laminaten.

11. Verwendung nach Anspruch 10 zur Herstellung von Bekleidungsstücken.

12. Verwendung nach Anspruch 10 zur Herstellung von Tarnbekleidungen oder zur Herstellung von zur Tarnung dienenden Flächengebilden wie Planen, Netzen u.dgl.

13. Verwendung nach Anspruch 10 zur Herstellung von Dachunterspannbahnen.

14. Membranen nach einem oder mehreren der Ansprüche 1 bis 9, **dadurch gekennzeichnet, daß** die Membranen eine Dicke von 5 - 30 µm, vorzugsweise 5-10 µm aufweisen.

15. Membranen hergestellt nach einem Verfahren gemäß einem der Ansprüch 5 bis 9.

## Claims

1. Water vapor permeable, waterproof polyether ester membrane containing 1 to 10% by weight of finely dispersed carbon particles having an average size of 5 to 40 nm.

2. Polyether ester membrane according to Claim 1, **characterized in that** the carbon particles are soot.

3. Polyether ester membrane according to Claim 1 or 2, **characterized in that** it contains 2 to 5% by weight of carbon particles.

4. Polyether ester membrane according to one of Claims 1 to 3, **characterized in that** the particle size is 15 to 25 nm.

5. Process for manufacturing water vapor permeable, waterproof polyether ester membranes, **characterized by** initially melting polyether esters and distributing carbon particles having an average size of 5 to 40 nm under the application of high shear forces to produce a concentrate containing up to 40% by weight, and preferably up to 35% by weight, of carbon particles in polyether ester; incorporating this concentrate in solid or liquid form into additional polyether ester; and processing the polyether ester mass, provided with carbon particles in this manner, to obtain water vapor permeable, waterproof membranes.

6. Process according to Claim 5, **characterized in that** a concentrate is initially produced that contains up to 30% by weight of carbon particles in polyether ester.

7. Process according to Claim 5 or 6, **characterized in that** a concentrate is initially produced that contains at least 15% by weight, and preferably at least 20% by weight, of carbon particles in polyether ester.

8. Process according to one or more of Claims 5 to 7, **characterized in that** a polyether ester polymer of relative viscosity η between 3.5 and 4.2, measured in meta-cresol, is used to produce the concentrate.

9. Process according to one or more of Claims 1 to 8, **characterized in that** the incorporation of the concentrate into additional polyether ester is performed under the application of high shear forces.

10. Use of water vapor permeable, waterproof polyether ester membranes according to one of Claims 1 to 9 for manufacturing textile or industrial laminates.

11. Use according to Claim 10 for manufacturing articles of clothing.

12. Use according to Claim 10 for manufacturing camouflage clothing or flat structures serving for camouflage, such as tarpaulins, nets, and the like.

13. Use according to Claim 10 for manufacturing roof underlays.

14. Membranes according to one or more of Claims 1 to 9, **characterized in that** the membranes have a thickness of 5 to 30 µm, and preferably 5 to 10 µm.

15. Membranes manufactured using a process according to one of Claims 5 to 9.

## Revendications

1. Membrane en polyétherester perméable à la vapeur d'eau, étanche à l'eau, contenant en dispersion fine entre 1 et 10 % en poids de particules de carbone d'une grandeur moyenne comprise entre 5 et 40 nm.

2. Membrane en polyétherester selon la revendication 1, **caractérisée en ce que** les particules de carbone sont du noir de fumée.

3. Membrane en polyétherester selon l'une quelconque des revendications 1 à 2, **caractérisée en ce qu'**elle contient entre 2 et 5 % en poids de particules.

4. Membrane en polyétherester selon l'une quelconque des revendications 1 à 3, **caractérisée en ce que** la grandeur des particules se situe entre 15 et 25 nm.

5. Procédé de fabrication de membranes en polyétherester perméables à la vapeur d'eau, étanches à l'eau, **caractérisé en ce qu'**on fabrique d'abord en faisant fondre des polyéthers d'ester et en répartissant des particules de carbone d'une grandeur moyenne comprise entre 5 et 40 nm en utilisant des forces de cisaillement élevées un concentré contenant jusqu'à 40 % en poids, de préférence jusqu'à 35 % en poids de particules de carbone dans du polyétherester et qu'on incorpore ledit concentré sous forme solide ou liquide dans davantage de polyétherester et qu'on transforme ladite masse de polyétherester ainsi pourvue de particules de carbone en membranes perméables à la vapeur d'eau, étanches à l'eau.

6. Procédé selon la revendication 5, **caractérisé en ce qu'**on fabrique d'abord un concentré contenant jusqu'à 30 % en poids de particules de carbone dans du polyétherester.

7. Procédé selon la revendication 5 ou 6, **caractérisé en ce qu'**on fabrique d'abord un concentré contenant au moins 15 % en poids, de préférence au moins 20 % en poids de particules de carbone dans du polyétherester.

8. Procédé selon l'une quelconque ou plusieurs des revendications 5 à 7, **caractérisé en ce qu'**on utilise pour la fabrication du concentré un polymère de polyétherester avec une viscosité relative η comprise entre 3,5 et 4,2 mesurée dans du méta-crésol.

9. Procédé selon l'une quelconque ou plusieurs des revendications 1 à 8, **caractérisé en ce que** l'incorporation du concentré dans le polyétherester se fait en utilisant des forces de cisaillement élevées.

10. Utilisation des membranes en polyétherester perméables à la vapeur d'eau, étanches à l'eau selon l'une quelconque des revendications 1 à 9 pour la fabrication de stratifiés textiles ou industriels.

11. Utilisation selon la revendication 10 pour la fabrication de vêtements.

12. Utilisation selon la revendication 10 pour la fabrication de vêtements de camouflage ou pour la fabrication de produits de camouflage à surface plane tels que des bâches, des filets etc.

13. Utilisation selon la revendication 10 pour la fabrication d'écrans de sous-toiture.

14. Membranes selon l'une quelconque ou plusieurs des revendications 1 à 9, **caractérisées en ce que** les membranes présentent une épaisseur comprise entre 5 et 30 µm, de préférence entre 5 et 10 µm.

15. Membranes fabriquées d'après un procédé selon une quelconque des revendications 5 à 9.
